# FASCICULE DE BREVET EUROPEEN

(11) **EP 1 136 342 B1**
(45) Date de publication et mention de la délivrance du brevet: **17.09.2003**
(21) Numéro de dépôt: 01420038.0
(22) Date de dépôt: 14.02.2001
(51) Int. Cl.: B62D 3/12

(54) **Ligne poussoir pour direction à crémaillère de véhicule automobile**
Druckstückelementenanordnung für eine Kraftfahrzeug- Zahnstangenlenkung
Pressing yoke arrangement for a motor vehicle rack-and-pinion steering

(30) Priorité: 22.03.2000 FR 0003683
(43) Date de publication de la demande: 26.09.2001
(73) Titulaire: Société de Mécanique d'Irigny, 69540 Irigny (FR)
(72) Inventeur: Pantale, David, 69126 Brindas (FR); Hisler, Gilbert, 69110 Sainte Foy les Lyon (FR)
(74) Mandataire: Bratel, Gérard

(56) Documents cités:
- PATENT ABSTRACTS OF JAPAN vol. 1999, no. 08, 30 juin 1999 (1999-06-30) -& JP 11 078913 A (TOYOTA MOTOR CORP), 23 mars 1999 (1999-03-23)
- PATENT ABSTRACTS OF JAPAN vol. 014, no. 227 (C-0718), 15 mai 1990 (1990-05-15) -& JP 02 055100 A (EIDAI KAKO KK), 23 février 1990 (1990-02-23)

## Description

La présente invention concerne, de façon générale, les systèmes de direction pour véhicules automobiles. Elle se rapporte, plus particulièrement, aux directions mécaniques à crémaillère et encore plus précisément, dans ce type de directions, à la fonction de réglage de l'engrènement entre le pignon de direction et la crémaillère.

Dans une direction mécanique à crémaillère de véhicule automobile, la rotation appliquée par le volant sur la colonne de direction se reporte sur le pignon de direction, lequel engrène avec la crémaillère pour convertir la rotation de la colonne de direction en une translation latérale. Le dispositif pignon-crémaillère est monté dans un ensemble carter, réalisé dans un matériau métallique ou dans une matière synthétique (polymère).

Les efforts appliqués sur ces éléments lors de l'utilisation du véhicule, conjugués aux imprécisions d'usinage, conduisent à des déformations élastiques, notamment de la crémaillère, qui induisent des conditions fonctionnelles rédhibitoires.

Pour assurer une transmission régulière, précise et silencieuse au mécanisme de direction, afin d'obtenir un fonctionnement satisfaisant, il est prévu un dispositif d'appui permanent, appelé « ligne poussoir» , qui permet de renforcer et de contrôler le contact de la crémaillère avec le pignon de direction, en compensant les jeux. Des exemples de lignes poussoir connues sont donnés dans les demandes de brevets européens EP 0 758 605 A et EP 0 860 345 A, ou dans la demande de brevet français FR 2 663 284 A, ou encore dans la demande de brevet japonais JP 11078913 A, à partir de laquelle est établi le préambule de la revendication 1.

Pour assurer sa fonction d'appui de la crémaillère sur le pignon, avec un effort contrôlé, la ligne poussoir se compose habituellement des éléments suivants :
- un poussoir proprement dit, de forme adaptée au contact avec la crémaillère, qui est guidé dans le carter ou est réalisé d'une seule pièce avec ce dernier, le poussoir étant réalisé en un seul matériau ou en plusieurs matériaux, métallique(s) ou synthétique(s) ;
- éventuellement une rondelle d'appui métallique, pressée contre le poussoir, du côté opposé à la crémaillère ;
- des moyens à ressort, sous la forme d'un ressort à spires et/ou de rondelles-ressort calibrées, qui transmettent un effort axial au poussoir, directement ou par l'intermédiaire de la rondelle d'appui ;
- une vis en matériau métallique ou synthétique, guidée par son filetage dans le carter et assurant, par sa rotation, la compression satisfaisante des moyens à ressort, tout en permettant de finaliser le réglage du dispositif.

Une variante consiste à remplacer la vis par un anneau élastique (circlips) d'épaisseur calibrée. Celui-ci est en appui dans une gorge usinée du carter, pour ajuster l'effort de calage de la crémaillère.

L'étanchéité à l'eau du dispositif est assurée par un joint en élastomère monté entre l'un des composants précités et le carter, ou bien par un bouchon obturateur situé du côté extérieur de la ligne poussoir.

Dans tous les cas, la structure de la ligne poussoir reste relativement complexe, le nombre total des pièces constitutives étant assez élevé, et les opérations de montage étant relativement nombreuses, et à ceci s'ajoutant la nécessité de ménager un filetage ou une gorge dans le carter.

La présente invention vise à éliminer ces inconvénients, en fournissant une ligne poussoir dans laquelle le nombre de composants est réduit, et dont le montage est simplifié, tout en permettant le réglage et en assurant l'étanchéité.

A cet effet, l'invention a pour objet une ligne poussoir pour direction à crémaillère de véhicule automobile, avec un poussoir guidé dans le carter de direction et appuyé sur la crémaillère, facultativement une rondelle d'appui pressée contre le poussoir du côté opposé à la crémaillère, des moyens à ressort aptes à transmettre un effort axial au poussoir, directement ou par l'intermédiaire de la rondelle d'appui, et des moyens de réglage de cet effort, la ligne poussoir étant caractérisée par le fait que lesdits moyens de réglage sont constitués par une rondelle de blocage déformable élastiquement, montée dans une partie tubulaire du carter recevant la ligne poussoir, la périphérie de la rondelle de calage étant accrochée sur la paroi intérieure de la partie tubulaire du carter, dans une position axiale sélectionnée, tandis que la partie centrale de ladite rondelle de calage coopère avec les moyens à ressort transmettant un effort axial au poussoir, ou constitue elle-même ces moyens à ressort.

L'invention est ainsi fondée sur l'utilisation d'une rondelle de blocage, qui remplace la vis ou l'anneau élastique communément employés comme moyens de réglage de l'effort, le montage de cette rondelle de blocage se faisant sur une partie tubulaire de carter à paroi intérieure lisse, sans filetage ni gorge.

La rondelle de blocage peut posséder, à sa périphérie, des ailettes inclinées assurant son accrochage sur la paroi intérieure de la partie tubulaire du carter. Cette rondelle de blocage peut aussi posséder, à sa périphérie, un simple bord circulaire incliné, formant une arête vive suffisante pour assurer une fonction d'accrochage latéral contre ladite paroi intérieure. L'inclinaison des ailettes périphériques ou du bord circulaire de la rondelle de blocage suffit à assurer leur accrochage dans le carter, sans possibilité de recul dans les conditions d'utilisation, le diamètre extérieur de cette rondelle (à l'état libre) étant très sensiblement supérieur au diamètre interne de la partie tubulaire du carter.

La partie centrale de la rondelle de blocage peut être rigide et sensiblement plane, pour assurer l'appui des moyens à ressort, constitués par exemple par une simple pastille élastique.

Dans une autre forme de réalisation de l'invention, la partie centrale de la rondelle de blocage forme des dents élastiques, courbées en direction du poussoir, qui jouent le rôle des moyens à ressort et remplacent la ou les pièces habituellement utilisées pour former les moyens à ressort. En particulier, dans cette dernière forme de réalisation, l'invention permet une réduction du nombre de pièces de la ligne poussoir, et une simplification des opérations de montage de celle-ci, donc une économie sensible.

Quels que soient ses détails structurels et fonctionnels, la rondelle de blocage peut être obtenue notamment par découpe et emboutissage, cette rondelle étant réalisée en acier à ressort ou similaire, avec des caractéristiques mécaniques élevées qui lui confèrent cependant l'aptitude à une déformation élastique, lors de sa mise en place dans le carter, cette déformation élastique étant aussi mise à profit dans le cas où la rondelle joue elle-même le rôle des moyens à ressort.

Le positionnement de la rondelle de blocage, plus ou moins enfoncée dans la partie tubulaire du carter, assure le réglage de l'effort axial transmis au poussoir. Compte tenu du caractère irréversible (impossibilité de recul) du positionnement de la rondelle de blocage, deux procédures sont envisageables pour effectuer le réglage :
- Une première procédure consiste à réaliser un calage par enfoncement progressif de la rondelle de blocage, associé à une mesure de l'effort de déplacement de la crémaillère. Le positionnement de la rondelle est acquis avec la stabilisation de l'effort dans sa plage de définition.
- Une autre procédure consiste en un collage par enfoncement en butée de la rondelle de blocage, associé à la mesure d'un jeu de la crémaillère. Pour effectuer ce mode de réglage, un dispositif positionne la crémaillère avec un jeu fonctionnel défini par rapport au pignon. L'augmentation significative de l'effort d'enfoncement de la rondelle assure le positionnement recherché.

Un démontage éventuel de la ligne poussoir reste réalisable, en détruisant ou dégradant la rondelle de blocage.

L'invention sera mieux comprise à l'aide de la description qui suit, en référence au dessin schématique annexé représentant, à titre d'exemples, quelques formes d'exécution de cette ligne poussoir pour direction à crémaillère :
Figure 1 est une vue en coupe axiale d'une ligne poussoir conforme à la présente invention :
Figure 2 est une vue en coupe axiale, similaire à figure 1, d'une variante de cette ligne poussoir :
Figure 3 est une vue de détail, de face, de la rondelle de blocage appartenant au dispositif de la figure 2.

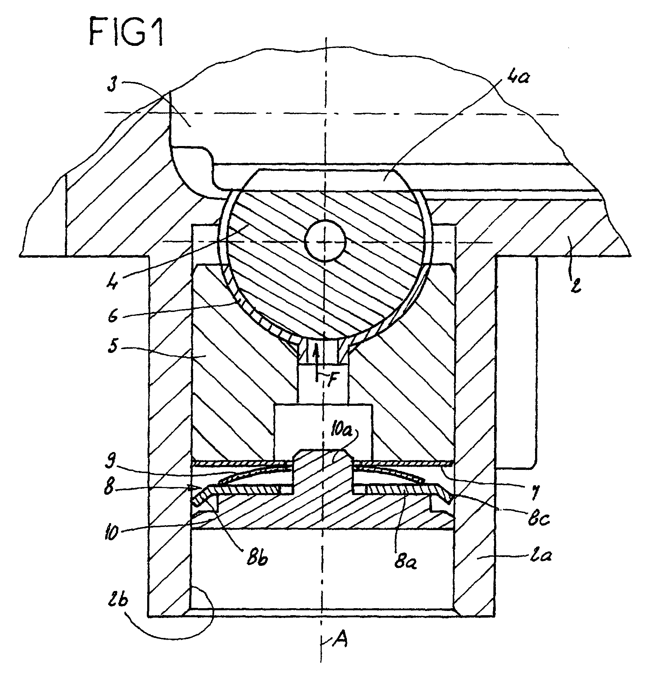

La figure 1 représente partiellement une direction à crémaillère de véhicule automobile, dont elle montre le carter 2 logeant le pignon de direction 3 et la crémaillère 4, dont la denture 4a vient en prise avec le pignon 3, accouplé à la colonne de direction (non représentée)

Le carter de direction 2 possède une partie tubulaire 2a, ouverte vers l'extérieur, dont l'axe central A s'étend orthogonalement aux axes du pignon 3 et de la crémaillère 4. La partie tubulaire 20 possède une paroi intérieure 2b, cylindrique, lisse.

Les éléments de la ligne poussoir, décrits ci-après, sont logés à l'intérieur de la partie tubulaire 2a du carter 2.

Ces éléments comprennent un poussoir proprement dit 5, guidé en coulissement suivant l'axe A dans la partie tubulaire 2a. De forme adaptée au profil du dos de la crémaillère 4, le poussoir 5 vient en contact avec cette dernière par l'intermédiaire d'un patin d'appui 6.

Facultativement, une rondelle d'appui métallique 7 est placée contre la face terminale du poussoir 5, opposée à la crémaillère 4.

Derrière la rondelle d'appui 7, est mise en place une rondelle de blocage 8, en acier à ressort ou similaire. La rondelle de blocage 8 possède une partie centrale plane 8a, entourée par une zone périphérique annulaire 8b, d'allure tronconique, limitée extérieurement par une arête vive circulaire 8c. A l'état libre, la rondelle de blocage 8 possède un diamètre extérieur très sensiblement supérieur au diamètre interne de la partie tubulaire 2a du carter 2. La rondelle de blocage 8 peut ainsi être arc-boutée dans la partie tubulaire 2a, en s'accrochant (avec une légère pénétration) dans la paroi intérieure 2b de ladite partie tubulaire 2a, le sens de montage de la rondelle de blocage 8 rendant le recul de celle-ci impossible.

Entre la rondelle d'appui 7 d'une part, et la rondelle de blocage 8, est insérée une pastille élastique 9. Cette pastille 9, prenant appui sur la partie centrale rigide 8a de la rondelle 8, exerce sur le poussoir 5, par l'intermédiaire de la rondelle d'appui 7, un effort axial F qui est, lui-même, transmis à la crémaillère 4 par l'intermédiaire du patin d'appui 6.

Le positionnement de la rondelle de blocage 8, plus ou moins enfoncée dans la partie tubulaire 2a du carter 2, permet d'ajuster l'effort F, donc l'effort de contact appliqué par la crémaillère 4 contre le pignon 3.

Enfin, un obturateur 10 est inséré dans la partie tubulaire 2a du carter 2, derrière la rondelle de blocage 8. Dans l'exemple illustré, l'obturateur 10 est disposé au contact de la rondelle de blocage 8. Cet obturateur 10 peut comporter un téton central 10a, apte à assurer le centrage de la pastille élastique 9.

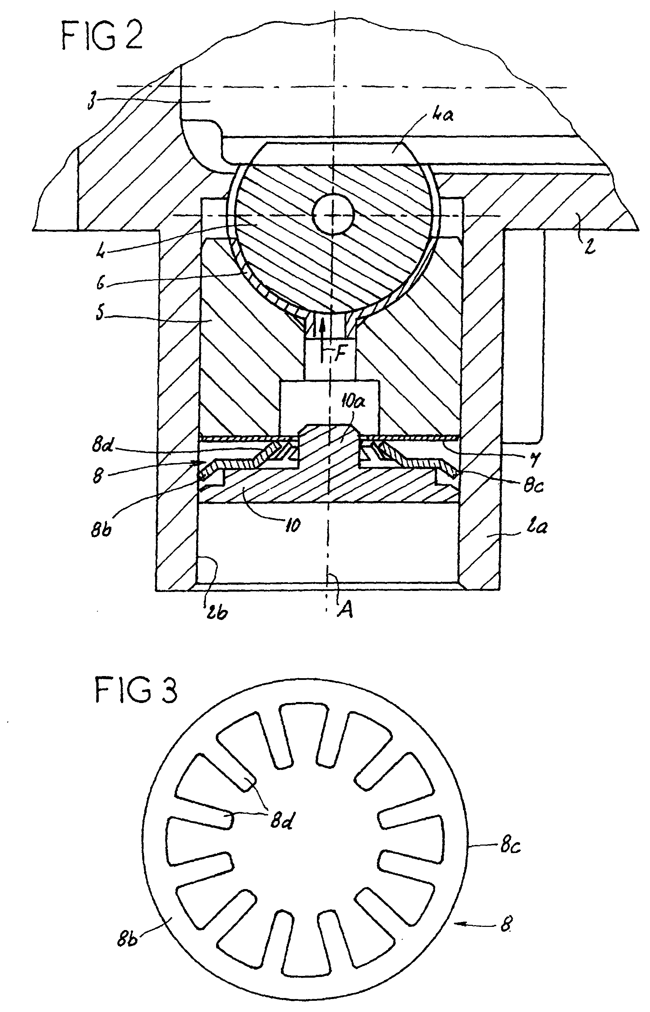

Les figures 2 et 3, sur lesquelles les éléments correspondant à ceux précédemment décrits sont désignés par les mêmes repères, illustrent une variante de la ligne poussoir, dans laquelle la bague de blocage 8 constitue, par elle-même, les moyens à ressort exerçant l'effort axial F.

La périphérie 8b de la rondelle de blocage 8 est ici réalisée comme décrit précédemment pour assurer l'accrochage de cette rondelle 8 sur la paroi intérieure 2b de la partie tubulaire 2a du carter 2.

Par contre, la partie centrale de la rondelle de blocage 8 est réalisée différemment, et elle forme des dents élastiques 8d, courbées en direction du poussoir 5. Ces dents 8d viennent presser, par leurs extrémités libres, la rondelle d'appui 6 appliquée contre l'arrière du poussoir 5.

D'une manière analogue aux dents élastiques 8d, la périphérie 8b de la rondelle de blocage 8 peut comporter des ailettes inclinées, assurant l'accrochage de cette rondelle 8 sur la paroi intérieure 2b de la partie tubulaire 2a du carter 2 (en lieu et place de l'arête vive circulaire 8c).

La ligne poussoir, précédemment décrite, est applicable notamment à des directions à crémaillère manuelles, mais elle peut aussi être incorporée à des directions assistées.

L'on ne s'éloignerait pas du cadre de l'invention, telle que définie dans les revendications annexées :
- en modifiant les détails de forme de la rondelle de blocage ;
- en supprimant la rondelle d'appui, qui reste facultative et dont la présence ou l'absence dépend des matériaux constitutifs du poussoir, les moyens à ressort agissant directement sur le poussoir dans le cas de la suppression de ladite rondelle d'appui ;
- en réalisant les moyens à ressort sous toute forme appropriée (dans le cas où ces moyens ne sont pas constitués par la rondelle de blocage elle-même) ;
- en disposant l'obturateur non pas au contact de la rondelle de blocage, mais à distance de cette rondelle ;
- en destinant le même dispositif à une ligne poussoir avec poussoir de toute forme, matière ou constitution.

## Revendications

1. Ligne poussoir pour direction mécanique à crémaillère de véhicule automobile, visant à renforcer et contrôler le contact d'une crémaillère (4) avec un pignon de direction (3), et comprenant un poussoir (5) guidé dans un carter de direction (2) et appuyé sur la crémaillère (4), facultativement une rondelle d'appui (7) pressée contre le poussoir (5) du côté opposé à la crémaillère (4), des moyens à ressort (9) aptes à transmettre un effort axial (F) au poussoir (5), directement ou par l'intermédiaire de la rondelle d'appui (7), et des moyens de réglage (8) de cet effort (F), **caractérisée en ce que** lesdits moyens de réglage sont constitués par une rondelle de blocage (8) déformable élastiquement, montée dans une partie tubulaire (2a) du carter (2) recevant la ligne poussoir, la périphérie (8b, 8c) de la rondelle de blocage (8) étant accrochée sur une paroi intérieure (2b) de la partie tubulaire (2a) du carter (2), dans une position axiale sélectionnée, tandis qu'une partie centrale (8a ; 8d) de ladite rondelle de blocage (8) coopère avec les moyens à ressort (9) transmettant un effort axial (F) au poussoir (5), ou constitue elle-même ces moyens à ressort.

2. Ligne poussoir selon la revendication 1, **caractérisée en ce que** la rondelle de blocage (8) possède, à sa périphérie (8b), des ailettes inclinées assurant son accrochage sur la paroi intérieure (2b) de la partie tubulaire (2a) du carter (2).

3. Ligne poussoir selon la revendication 1, **caractérisée en ce que** la rondelle de blocage (8) possède, à sa périphérie, un bord circulaire incliné (8b), formant une arête vive (8c) apte à s'accrocher sur la paroi intérieure (2b) de la partie tubulaire (2a) du carter (2).

4. Ligne poussoir selon l'une quelconque des revendications 1 à 3, **caractérisée en ce que** la partie centrale (8a) de la rondelle de blocage (8) est rigide et sensiblement plane, et assure l'appui des moyens à ressort, constitués par exemple par une pastille élastique (9).

5. Ligne poussoir selon l'une quelconque des revendications 1 à 3, **caractérisée en ce que** la partie centrale de la rondelle de blocage forme des dents élastiques (8d), courbées en direction du poussoir (5), constituant les moyens à ressort précités.

6. Ligne poussoir selon l'une quelconque des revendications 1 à 5, **caractérisée en ce qu'**elle comprend encore un obturateur (10), inséré dans la partie tubulaire (2a) du carter (2), derrière la rondelle de blocage (8), au contact de cette rondelle (8) ou à distance de celle-ci.

## Patentansprüche

1. Druckmechanismus für eine mechanische Zahnstangenlenkung eines Kraftfahrzeugs zum Verstärken und Steuern des Kontakts einer Zahnstange (4) mit einem Lenkungsritzel (3), der folgendes aufweist: eine in einem Lenkgehäuse (2) geführte und an der Zahnstange (4) abgestützte Druckeinrichtung (5), gegebenenfalls eine Auflagescheibe (7), die auf der der Zahnstange (4) gegenüberliegenden Seite gegen die Druckeinrichtung (5) gedrückt wird, Federeinrichtungen (9), die dazu geeignet sind, eine axiale Kraft (F) unmittelbar oder über die Auflagescheibe (7) auf die Druckeinrichtung (5) zu übertragen, und Einrichtungen (8) zum Einstellen dieser Kraft (F),
**dadurch gekennzeichnet,**
**daß** die Einstelleinrichtungen von einer elastisch verformbaren Blockierscheibe (8) gebildet sind, die in einem rohrförmigen Bereich (2a) des Gehäuses (2) montiert ist, das den Druckmechanismus aufnimmt, wobei der Umfang (8b, 8c) der Blockierscheibe (8) in einer ausgewählten axialen Position an einer Innenwand (2b) des rohrförmigen Bereichs (2a) des Gehäuses (2) verhakt ist, während ein mittlerer Bereich (8a; 8d) der Blokkierscheibe (8) mit den Federeinrichtungen (9) zum Ausüben einer axialen Kraft (F) auf die Druckeinrichtung (5) zusammenwirkt oder selbst diese Federeinrichtungen bildet.

2. Druckmechanismus nach Anspruch 1,
**dadurch gekennzeichnet,**
**daß** die Blockierscheibe (8) an ihrem Umfang (8b) geneigte Flügel aufweist, die ihr Verhaken an der Innenwand (2b) des rohrförmigen Bereichs (2a) des Gehäuses (2) gewährleisten.

3. Druckmechanismus nach Anspruch 1,
**dadurch gekennzeichnet,**
**daß** die Blockierscheibe (8) an ihrem Umfang einen geneigten ringförmigen Rand (8b) aufweist, der eine scharfe Kante (8c) bildet, die dazu ausgebildet ist, sich an der Innenwand (2b) des rohrförmigen Bereichs (2a) des Gehäuses (2) zu verhaken.

4. Druckmechanismus nach einem der Ansprüche 1 bis 3,
**dadurch gekennzeichnet,**
**daß** der mittlere Bereich (8a) der Blockierscheibe (8) starr und im wesentlichen eben ist und das Abstützen der Federeinrichtungen gewährleistet, die z.B. aus einem elastischen Plättchen (9) bestehen.

5. Druckmechanismus nach einem der Ansprüche 1 bis 3,
**dadurch gekennzeichnet,**
**daß** der mittlere Bereich der Blockierscheibe elastische Zähne (8d) bildet, die in Richtung der Druckeinrichtung (5) gekrümmt sind und die genannten Federeinrichtungen bilden.

6. Druckmechanismus nach einem der Ansprüche 1 bis 5,
**dadurch gekennzeichnet,**
**daß** er ferner ein Verschlußorgan (10) aufweist, das in den rohrförmigen Bereich (2a) des Gehäuses (2) hinter der Blockierscheibe (8) und in Kontakt mit dieser Scheibe (8) oder im Abstand von dieser eingesetzt ist.

## Claims

1. A pusher line for a mechanical rack and pinion steering system of a motor vehicle, with the purpose of reinforcing and controlling the contact of a rack (4) with a steering pinion (3), and comprising a pusher (5) guided in a steering housing (2) and bearing on the rack (4), optionally a bearing washer (7) pressed against the pusher (5) on the opposite side to the rack (4), spring means (9) capable of transmitting an axial force (F) to the pusher (5), directly or via the bearing washer (7), and control means (8) for said force (F), **characterised in that** said control means are formed by an elastically deformable locking washer (8) which is mounted in a tubular part (2a) of the housing (2) which receives the pusher line, the periphery (8b, 8c) of the locking washer (8) being locked against an internal wall (2b) of the tubular part (2a) of the housing (2) in a selected axial position, whilst a central part (8a; 8d) of said locking washer (8) cooperates with the spring means (9) which transmit an axial force (F) to the pusher (5), or itself constitutes said spring means.

2. A pusher line according to claim 1, **characterised in that** the locking washer (8) has inclined vanes at its periphery (8b) which ensure that it is locked against the internal wall (2b) of the tubular part (2a) of the housing (2).

3. A pusher line according to claim 1, **characterised in that** the locking washer (8) has an inclined circular rim (8b) at its periphery, which rim forms a sharp edge (8c) which is capable of locking against the internal wall (2b) of the tubular part (2a) of the housing (2).

4. A pusher line according to any one of claims 1 to 3, **characterised in that** the central part (8a) of the locking washer (8) is rigid and substantially plane and provides the support for the spring means which are formed, for example, by an elastic disc (9).

5. A pusher line according to any one of claims 1 to 3, **characterised in that** the central part of the locking washer forms elastic teeth (8d) which are curved towards the pusher (5) and which form the aforementioned spring means.

6. A pusher line according to any one of claims 1 to 5, **characterised in that** it also comprises a seal (10) which is inserted in the tubular part (2a) of the housing (2) behind the locking washer (8), in contact with said washer (8) or at a distance therefrom.
